# DEMANDE DE BREVET EUROPEEN

(11) **EP 4 421 527 A1**
(43) Date de publication de la demande: **28.08.2024**
(21) Numéro de dépôt: 24158918.3
(22) Date de dépôt: 21.02.2024
(51) Int. Cl.: G01S 13/88, G01S 7/41, G01N 22/00

(54) **SYSTEME ET PROCEDE DE DETECTION DE MATERIAUX POUR LE TRI D'OBJETS**

(30) Priorité: 21.02.2023 FR 2301598
(71) Demandeur: Commissariat à l'énergie atomique et aux énergies alternatives, 75015 Paris (FR); TERRADONA, 13790 Rousset (FR)
(72) Inventeur: D'ERRICO, Raffaele, 38054 GRENOBLE CEDEX 09 (FR); CAILLET, Mathieu, 38054 GRENOBLE CEDEX 09 (FR); DELAVEAUD, Christophe, 38054 GRENOBLE CEDEX 09 (FR); DANIELE, Norbert, 38054 GRENOBLE CEDEX 09 (FR); OLIVERI, Mathieu, 13770 VENELLES (FR)
(74) Mandataire: Cabinet Beaumont

(57) **Abrégé**

La présente description concerne un système (10) de détection du matériau composant un objet (50) comprenant un dispositif émetteur/récepteur (30) d'ondes radar (R), au moins un réflecteur (40) des ondes radar (R), et un support (20), sur lequel l'objet est destiné à se déplacer, entre le dispositif émetteur/récepteur (30) et le réflecteur (40).

## Description

### Domaine technique

La présente demande concerne un système de détection de matériaux d'objets, notamment de matériaux de déchets pour le domaine du tri des déchets résultant d'usages professionnels ou non professionnels destiné à la récupération et au recyclage comme par exemple les conteneurs de tri sélectif.

### Technique antérieure

Certains systèmes de tri sélectif sont destinés à recevoir des déchets, par exemple des déchets métalliques, des déchets plastiques, des déchets en verre, des déchets en carton ou des biodéchets. Pour certaines applications, il serait souhaitable de pouvoir déterminer le matériau composant le déchet introduit, notamment pour déterminer si des déchets autres que des déchets acceptés sont introduits dans le système ou pour compter le volume de déchets introduits selon les matériaux des déchets.

Une possibilité pour réaliser le tri de déchets est de prévoir un marqueur sur chaque déchet, par exemple un code-barre, et d'équiper le conteneur de déchets d'un système de détection comprenant un lecteur de codes-barres adapté à lire le code-barre de chaque déchet introduit dans le conteneur. Un inconvénient d'un tel système de détection est qu'il nécessite l'application des marqueurs sur chaque déchet, ce qui peut présenter un coût élevé. L'utilisation d'un capteur optique peut en outre être problématique, car le capteur optique se salit rapidement dans un environnement soumis aux déchets.

### Résumé de l'invention

Un objet d'un mode de réalisation est de pallier tout ou partie des inconvénients des systèmes de détection de matériaux d'objets, notamment de déchets, décrits précédemment.

Un autre objet d'un mode de réalisation est que le système de détection ne requiert pas la modification des objets par rapport aux objets actuellement consommés.

Un autre objet d'un mode de réalisation est que le système de détection permet de détecter que les objets ne sont pas des objets en matériaux autorisés ou attendus.

Un autre objet d'un mode de réalisation est que le système de détection a une consommation réduite.

Un mode de réalisation prévoit un système de détection du matériau composant un objet comprenant un dispositif émetteur/récepteur d'ondes radar, au moins un réflecteur des ondes radar, et un support, sur lequel l'objet est destiné à se déplacer, entre le dispositif émetteur/récepteur et le réflecteur.

Selon un mode de réalisation, le dispositif émetteur/récepteur comprend au moins une antenne émettrice configurée pour émettre les ondes radar et au moins une antenne réceptrice configurée pour capter les ondes radar.

Selon un mode de réalisation, le dispositif émetteur/récepteur comprend au moins deux antennes émettrices configurées pour émettre les ondes radar et au moins deux antennes réceptrices configurées pour capter les ondes radar.

Selon un mode de réalisation, le dispositif émetteur/récepteur comprend un module de traitement et un récepteur, relié à l'antenne réceptrice, et configuré pour fournir au module de traitement un signal numérique représentatif de l'enveloppe des ondes radar captées par l'antenne réceptrice.

Selon un mode de réalisation, le module de traitement met en oeuvre un algorithme d'intelligence artificielle, notamment du type réseau de neurones, dont les coefficients ont été déterminés par une étape d'apprentissage.

Selon un mode de réalisation, le dispositif émetteur/récepteur est configuré pour acquérir un signal numérique en présence de l'objet et un autre signal numérique en l'absence de l'objet.

Selon un mode de réalisation, le réflecteur s'étend en outre au moins en vis-à-vis du support, l'objet étant destiné à se déplacer sur le support entre le support et le réflecteur.

Selon un mode de réalisation, le réflecteur s'étend en outre au moins en vis-à-vis du support, le support étant entre le réflecteur et l'objet lorsque l'objet se déplace sur le support.

Selon un mode de réalisation, le réflecteur comprend au moins une plaque ou une grille métallique.

Un mode de réalisation prévoit également un système de collecte ou de tri d'objets résultant d'usages professionnels ou non professionnels, destiné à la récupération et au recyclage, notamment d'objets en verre, en métal, en carton, en plastique, ou biodéchets comprenant un système de détection des matériaux des objets tel que défini précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective, partielle et schématique, d'un mode de réalisation d'un conteneur à déchets ;
la figure 2 est une vue en perspective, partielle et schématique, d'un mode de réalisation d'un système de détection de déchets ;
la figure 3 illustre de façon schématique le principe de fonctionnement du système de détection représenté sur les figures 1 et 2 ;
la figure 4 illustre une variante du système de détection représenté sur les figures 1 à 3 ;
la figure 5 illustre une autre variante du système de détection représenté sur les figures 1 à 3 ;
la figure 6, la figure 7, la figure 8, et la figure 9 illustrent chacune de façon très schématique, en partie droite la propagation d'ondes électromagnétiques lors de l'utilisation du système de détection illustré sur les figures 1 à 3 dans différentes configurations, et, en partie gauche, l'amplitude et le retard du signal capté par le récepteur du système de détection illustré sur les figures 1 à 3 pour la configuration considérée ;
la figure 10 représente des chronogrammes du signal capté par le récepteur du système de détection illustré sur les figures 1 à 3 obtenus par essais avec différentes configurations d'utilisation ;
la figure 11 est un schéma par blocs d'un mode de réalisation d'un procédé de détection de matériaux mis en oeuvre par le système de détection de déchets représenté en figure 3 ; et
la figure 12 illustre de façon schématique un autre mode de réalisation d'un système de détection de déchets.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un système de détection de matériaux dans une position normale d'utilisation.

Sauf précision contraire, les expressions "environ", "approximativement", "sensiblement", et "de l'ordre de" signifient à 10 % près, de préférence à 5 % près. Sauf précision contraire, les adjectifs numéraux ordinaux, tels que "premier", "deuxième", etc., sont utilisés seulement pour distinguer des éléments entre eux. En particulier, ces adjectifs ne limitent pas les modes de réalisation décrits à un ordre particulier de ces éléments.

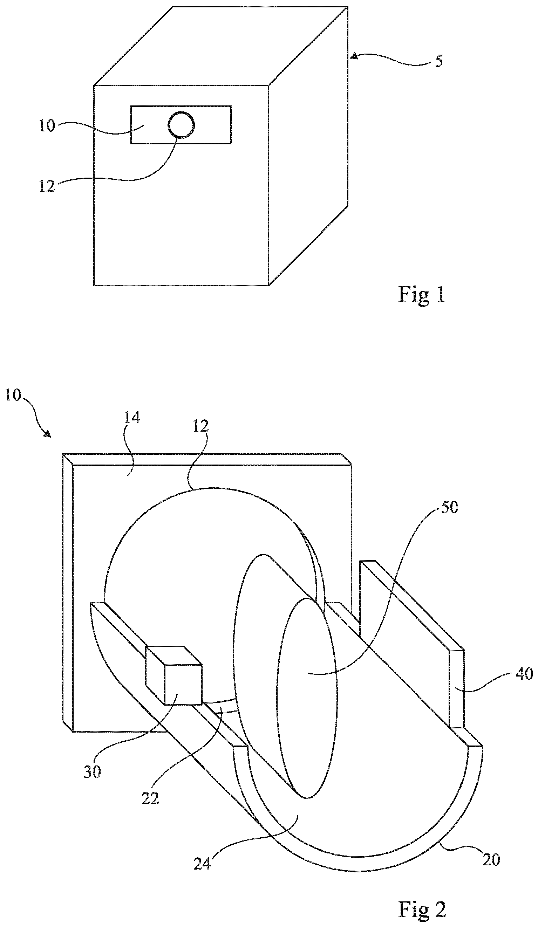

La figure 1 est une vue en perspective d'un mode de réalisation d'un conteneur 5 d'objets, par exemple de déchets. Le conteneur 5 comprend un système 10 de détection de matériaux d'objets introduits dans le conteneur 5 par une ouverture 12. A titre d'exemple, l'ouverture 12 a une forme circulaire, elliptique, ou rectangulaire. Selon un mode de réalisation, le système de détection 10 est intégré au conteneur 5. Selon un autre mode de réalisation, le système de détection 10 est un appareil qui peut être monté sur un conteneur 5 déjà installé.

La figure 2 est une vue en perspective, partielle et schématique, d'un mode de réalisation du système 10 de détection de matériaux d'objets de la figure 1.

Sur la figure 2, on a représenté un flasque 14, par exemple sensiblement vertical, traversé par l'ouverture 12. Le flasque 14 peut être intégré au conteneur 5 ou peut correspondre à une pièce distincte fixée au conteneur 5 déjà installé.

Le système de détection 10 comprend un support 20, par exemple en un matériau plastique, disposé à l'intérieur du conteneur 5, et sur lequel est déplacé un objet 50 qui est introduit par l'ouverture 12 dans le conteneur. Le support 20 comprend un bord 22 qui est attenant au bord inférieur de l'ouverture 12. Le support 20 a par exemple la forme d'une goulotte, d'un tube à base circulaire, ovale, carrée, ou rectangulaire, ou d'une plaque plane. Selon le mode de réalisation illustré en figure 2, le support 20 comprend une surface supérieure 24 concave qui s'étend selon une direction inclinée par rapport à un plan horizontal d'un angle d'inclinaison α. La surface concave 24 est, par exemple, un secteur cylindrique. Selon un mode de réalisation, l'angle d'inclinaison α est supérieur à 10°. Le déplacement de l'objet sur le support 20 peut être obtenu par glissement de l'objet sur le support 20 sous l'action de la gravité. Le support 20 peut comprendre des moyens pour faciliter le déplacement de l'objet 50.

Le système de détection 10 comprend, en outre, un dispositif émetteur/récepteur 30 d'ondes électromagnétiques, appelées ondes radar par la suite, et un réflecteur 40 pour les ondes radar émises par le dispositif émetteur/récepteur 30 d'ondes radar. Dans le mode de réalisation illustré en figure 2, le système de détection 10 et le dispositif émetteur/récepteur 30 sont fixés au support 20. Toutefois, le maintien du dispositif émetteur/récepteur 30 et du réflecteur 40 peut être réalisé par tout moyen.

Le dispositif émetteur/récepteur 30 et le réflecteur 40 sont agencés par rapport au support 20 de façon qu'un objet se déplaçant sur le support 20 soit, au cours de son déplacement sur le support 20, interposé entre le dispositif émetteur/récepteur 30 et le réflecteur 40.

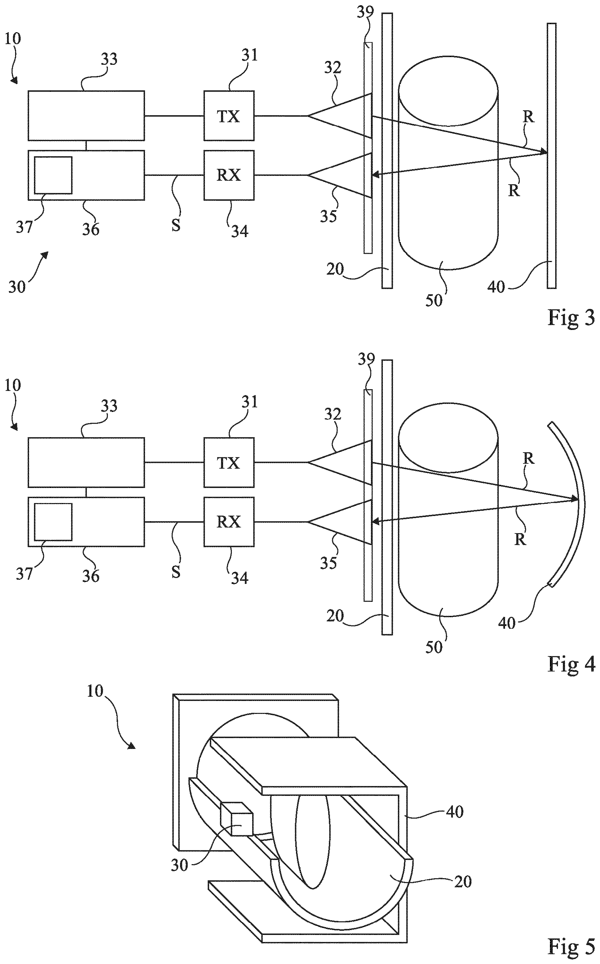

La figure 3 illustre le principe de fonctionnement du système de détection 10. En figure 3, on a représenté schématiquement le support 20, et un objet 50 se déplaçant sur le support 20 et interposé entre le dispositif émetteur/récepteur 30 et le réflecteur 40.

Le dispositif émetteur/récepteur 30 comprend une ou plusieurs sources d'émissions 31 (TX), reliée à une ou plusieurs antennes émettrices 32 pour l'émission d'ondes radar R, et commandée par un module de commande 33. Le dispositif émetteur/récepteur 30 comprend, en outre, un récepteur 34 (RX), relié à une antenne réceptrice 35 pour la réception d'ondes radar R, et fournissant à un module de traitement 36 un signal numérique S représentatif des ondes radar R captées par l'antenne réceptrice 35. Selon un mode de réalisation, le module de traitement 36 peut comprendre un processeur, par exemple un microcontrôleur. Selon un mode de réalisation, le module de traitement 36 peut comprendre une mémoire 37. Selon un mode de réalisation, la totalité ou une partie des éléments composant le dispositif émetteur/récepteur 30 sont agencés sur un support 39, par exemple un circuit imprimé.

Selon un mode de réalisation, les ondes radar R émises par l'antenne émettrice 32 ont des fréquences comprises entre 30 GHz et 100 GHz, ce qui correspond à des longueurs d'ondes comprises entre 1 cm et 3 mm. Les ondes radar peuvent être émises par le dispositif émetteur/récepteur 30 en continu ou de façon pulsée. Les ondes radar R peuvent correspondre à un signal électromagnétique modulé en amplitude ou en fréquence. La distance entre le réflecteur 40 et le dispositif émetteur/récepteur 30 est supérieure à 10 fois la longueur d'onde des ondes radar, et est par exemple comprise entre 15 cm et 1 m.

Le réflecteur 40 est configuré pour réfléchir les ondes radar qu'il reçoit. Selon un mode de réalisation, le réflecteur 40 correspond à une plaque métallique. Selon un autre mode de réalisation, le réflecteur 40 correspond à une grille métallique. Dans le mode de réalisation illustré sur les figures 2 et 3, le réflecteur 40 peut avoir une forme plane.

La figure 4 est une figure analogue à la figure 3 d'une variante du système 10 dans laquelle le réflecteur 40 a une forme non plane, par exemple concave. Le réflecteur 40 peut être conformé pour focaliser les ondes radar qu'il réfléchit vers l'antenne réceptrice 35 du dispositif émetteur/récepteur 30.

Dans le mode de réalisation illustré sur les figures 2 et 3, le réflecteur 40 est présent seulement en face du dispositif émetteur/récepteur 30.

La figure 5 est une figure analogue à la figure 2 d'une variante du système 10 dans laquelle le réflecteur 40 s'étend en outre au-dessus du support 20 et au-dessous du support 20. Les expressions précédentes au-dessus du support 20 et au-dessous du support 20 sont à prendre en compte par rapport à une direction verticale. Dans ce cas, le support 20 est en un matériau transparent pour les ondes radar. Selon un autre mode de réalisation, le support 20 peut être configuré pour réfléchir les ondes radar et faire partie du réflecteur 40. Selon un autre mode de réalisation, le réflecteur 40, incluant éventuellement le support 20, peut former une enceinte entourant l'objet 50 avec un passage pour l'objet 50 afin de former une chambre de mesure. Selon un mode de réalisation, le réflecteur 40 peut être constitué de plusieurs réflecteurs plans.

L'antenne émettrice 32 émet une onde radar qui est plus ou moins réfléchie par l'objet 50 en fonction de sa forme et de la nature du matériau qui le constitue. Selon le matériau composant l'objet 50, une partie de l'onde radar peut être transmise à travers l'objet 50 et être réfléchie par le réflecteur 40. Des phénomènes de réflexions multiples peuvent se créer entre le réflecteur 40 et le support 39 du dispositif émetteur/récepteur 30. En effet, le support 39 du dispositif émetteur/récepteur 30 peut agir comme un réflecteur pour les ondes radar, notamment lorsqu'il correspond à un circuit imprimé comprenant des pistes métalliques réfléchissant les ondes radar ou lorsqu'il est intégré dans un réflecteur détouré englobant le circuit imprimé ou le support 39. En outre, d'autres éléments du système de détection 10, notamment le support 20, peuvent réfléchir les ondes radar. Les ondes radar réfléchies qui atteignent le dispositif émetteur/récepteur 30 sont captées par l'antenne réceptrice 35. Le récepteur 34 fournit alors un signal S numérique représentatif de l'enveloppe des ondes radar captées par l'antenne réceptrice 35. Le module de traitement 36 est configuré pour déterminer le matériau composant l'objet 50 à partir du signal S. Selon un mode de réalisation, les valeurs successives du signal S déterminées au cours d'une acquisition sont stockées dans la mémoire 37. Des valeurs successives du signal S obtenues lors d'une acquisition ou d'acquisitions précédentes peuvent également être stockées dans la mémoire 37.

L'utilisation du réflecteur 40 placé derrière l'objet 50 par rapport à l'antenne émettrice 32, et du support 39 du dispositif émetteur/récepteur 30 permettent d'exploiter des échos supplémentaires qui caractérisent la rétrodiffusion des ondes radar en fonction de la nature de l'objet 50. De plus, le réflecteur 40 permet de maîtriser l'environnement autour de l'objet 50 indépendamment du contexte d'installation. Le mode de réalisation représenté en figure 5 permet de façon avantageuse d'augmenter le nombre de réflexions sur le réflecteur 40, ce qui permet d'exploiter davantage d'échos supplémentaires qui caractérisent la rétrodiffusion des ondes radar en fonction de la nature de l'objet 50.

Il peut être souhaitable de pouvoir détecter le matériau composant l'objet 50 parmi une liste de matériaux. Pour une application de tri sélectif, tout type de matériau peut être adressé qu'il soit industriel (pour les emballages) ou organique (biodéchets), avec par exemple le verre, le plastique, notamment le poly(téréphtalate d'éthylène) (PET), le polyéthylène haute densité (PEHD), le polyéthylène basse densité (PEBD), le polypropylène (PP), le polystyrène (PS), le polyéthylène (PE), ou le polychlorure de vinyle (PVC), le métal, notamment l'aluminium ou l'acier, les céramiques, le bois, la pierre, le papier, ou le carton. En effet, pour une application de tri sélectif, il peut être souhaitable de pouvoir détecter lorsque l'objet 50 est un objet en verre, par exemple une bouteille en verre, lorsque l'objet 50 est un objet en plastique, par exemple une bouteille en plastique, et lorsque l'objet 50 est un objet en métal, par exemple une canette métallique.

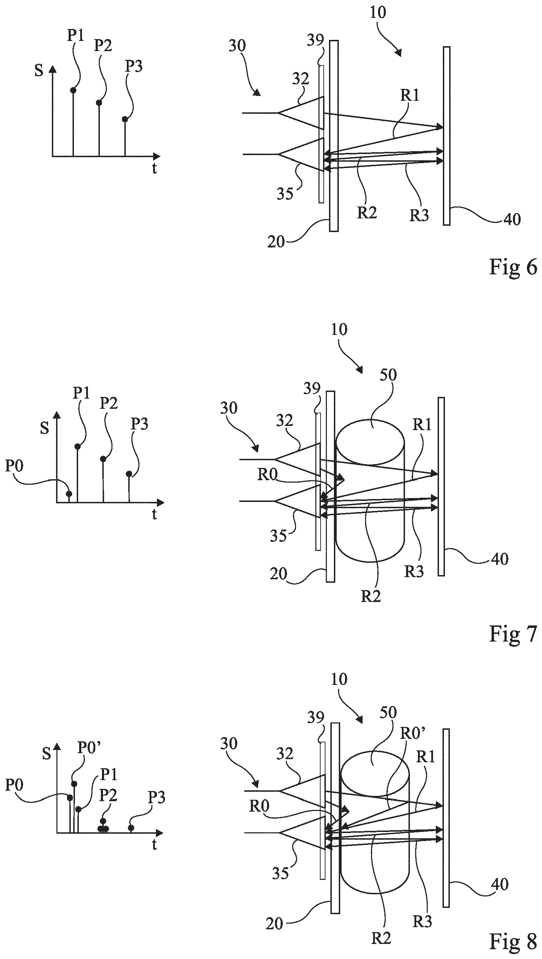

La figure 6, la figure 7, la figure 8, et la figure 9 illustrent chacune, de façon schématique, en partie droite, la propagation d'ondes radar lors de l'utilisation du système de détection 10 illustré sur les figures 1 à 3 respectivement en l'absence d'objet 50, et lorsque l'objet 50 est en plastique, en verre, et en métal, et, en partie gauche, l'amplitude et le retard du signal capté par le dispositif émetteur/récepteur 30 du système de détection 10 illustré sur les figures 1 à 3 pour la configuration considérée.

Les figures 6 à 9 ont pour but d'illustrer le principe de détection mis en oeuvre par le dispositif émetteur/récepteur 30. En partie droite de chacune de ces figures, on a représenté de façon très schématique par des flèches la propagation d'une onde radar R1 émise par l'antenne émettrice 32 et réfléchie par le réflecteur 40, la propagation d'une onde radar R2, qui correspond à une partie de l'onde radar R1 qui se réfléchit du côté du dispositif émetteur/récepteur 30 et puis du côté du réflecteur 40, et la propagation d'une onde radar R3, qui correspond à une partie de l'onde radar R2 qui se réfléchit du côté du dispositif émetteur/récepteur 30 et puis du côté du réflecteur 40. En partie droite des figures 7, 8, et 9, on a en outre représenté une onde radar R0 émise par l'antenne émettrice 32 et réfléchie sur la paroi de l'objet 50 la plus proche de l'antenne émettrice 32. En partie droite de la figure 8, on a en outre représenté une onde radar R0' émise par l'antenne émettrice 32 et réfléchie sur la paroi de l'objet 50 la plus éloignée de l'antenne émettrice 32. En partie gauche des figures 6 à 9, on a représenté l'amplitude de la réponse impulsionnelle du signal S mesuré. Le signal S peut comprendre des pics P0, P0', P1, P2, P3 correspondant respectivement aux ondes radar R0, R0', R1, R2, et R3.

Pour chaque onde R0, R1, R2, et R3, deux ou plus de deux pics P0, P1, P2, P3 peuvent être détectés en fonction des trajets parcourus par les ondes radar. Sur les figures 6 à 9, à des fins d'illustration, chaque pic P0, P0', P1, P2, P3 est représenté par une impulsion de Dirac. En pratique, en raison des nombreux trajets empruntés par les ondes radar, chaque pic P0, P0', P1, P2, P3 présente successivement, en fonction du temps, une phase ascendante, un maximum, et une phase descendante. En outre, le signal S peut passer par un minimum non nul entre deux pics successifs.

Dans le cas de la figure 6 relative à une configuration dans laquelle il n'y a pas d'objet 50, les pics P1, P2, P3 du signal S concernent des ondes radar qui se réfléchissent une fois et plus sur le réflecteur 40.

Dans le cas de la figure 7 relative à une configuration dans laquelle l'objet 50 est en plastique, les interactions entre l'objet 50 en plastique et les ondes radar sont faibles. Les pics P1, P2, P3 du signal S, concernant les ondes radar qui se réfléchissent une fois et plus sur le réflecteur 40 et sur le support 39 du dispositif émetteur/récepteur 30, sont légèrement atténués par rapport à la figure 6. De plus, le pic P0, concernant les ondes radar R0 qui se réfléchissent directement sur la surface de l'objet 50 la plus proche de l'antenne émettrice 32 peut être observé, mais est alors de faible amplitude.

Dans le cas de la figure 8 relative à une configuration dans laquelle l'objet 50 est en verre, les interactions entre l'objet 50 en verre et les ondes radar sont plus importantes que pour le plastique. Les pics P1, P2, P3 du signal S, concernant les ondes radar qui se réfléchissent une fois et plus sur le réflecteur 40 et sur le support 39 du dispositif émetteur/récepteur 30, sont plus fortement atténués par rapport à la figure 7. Le pic P0, concernant les ondes radar R0 qui se réfléchissent directement sur la surface de l'objet 50 la plus proche de l'antenne émettrice 32, est observé avec plus forte amplitude qu'en figure 7. En outre, le pic P0', concernant les ondes radar R0' qui se réfléchissent directement sur la surface de l'objet 50 la plus éloignée de l'antenne émettrice 32, peut être observé.

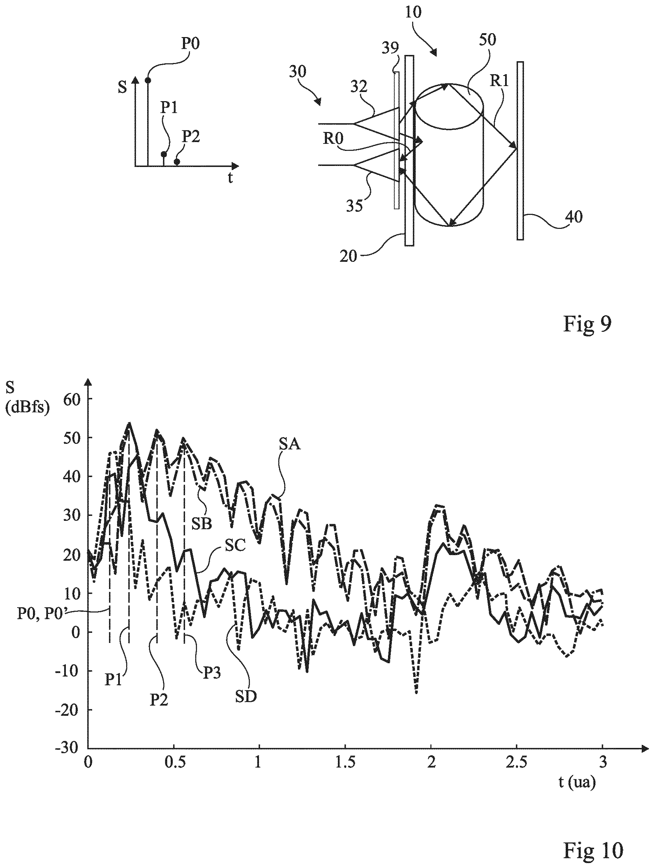

Dans le cas de la figure 9 relative à une configuration dans laquelle l'objet 50 est en métal, les interactions entre l'objet 50 en métal et les ondes radar sont plus importantes que pour le verre. Les pics P1, P2, P3 du signal S, concernant les ondes radar qui se réfléchissent une fois et plus sur le réflecteur 40, ont une amplitude réduite par rapport à la figure 8, le pic P3 visible en figure 8 n'étant pas présent en figure 9 à titre d'illustration. Le pic P0, concernant les ondes radar R0 qui se réfléchissent directement sur la face de l'objet 50 la plus proche de l'antenne émettrice 32, a une amplitude plus élevée qu'en figure 8.

Des essais ont été réalisés. Pour ces essais, les ondes radar émises par le dispositif émetteur/récepteur 30 ont une longueur d'onde égale à 5 mm. Le réflecteur 40 et le support 39 du dispositif émetteur/récepteur 30 sont des plaques, de préférence métalliques par exemple en aluminium, situées à une distance du dispositif émetteur/récepteur 30 égale à 17 cm.

La figure 10 représente des chronogrammes SA, SB, SC, SD, obtenus au cours des essais, du signal numérique S, exprimé en décibel pleine échelle (dBfs) obtenu respectivement en l'absence d'objet, et lorsque l'objet est en plastique, en verre, et en métal. On retrouve les pics P0, P0', P1, P2, P3.

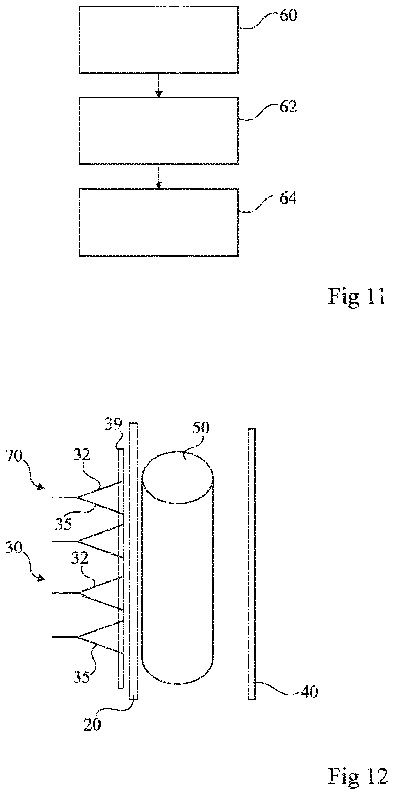

La figure 11 est un schéma par blocs d'un mode de réalisation d'un procédé de détection de matériaux mis en oeuvre par le système de détection d'objets représenté en figure 3.

A l'étape 60, le dispositif émetteur/récepteur 30 émet des ondes radar par l'intermédiaire de l'antenne émettrice 32. L'antenne réceptrice 35 capte des ondes radar qui se sont réfléchies sur l'objet 50 et/ou le réflecteur 40 et le récepteur 34 fournit le signal S numérique représentatif de l'amplitude de l'enveloppe des ondes radar reçues par l'antenne réceptrice 35 en fonction du temps. Selon un mode de réalisation, le dispositif émetteur/récepteur 30 fait une acquisition du signal S en l'absence d'objet 50, appelée signal de référence par la suite, et une acquisition du signal S en présence de l'objet 50. Selon un mode de réalisation, l'acquisition du signal de référence peut être réalisée au démarrage du dispositif émetteur/récepteur 30 et mémorisée dans la mémoire 37 du module de traitement 36.

A l'étape 62, le module de traitement 36 détermine des paramètres descriptifs du signal S acquis à l'étape 60. Les paramètres descriptifs comprennent par exemple la détermination du maximum de chaque pic du signal S et l'instant auquel le maximum est atteint. Les mêmes paramètres descriptifs sont déterminés pour le signal de référence.

A l'étape 64, le module de traitement 36 compare les paramètres descriptifs du signal S acquis et les paramètres descriptifs du signal de référence, et en déduit la nature du matériau composant l'objet 50. Selon un mode de réalisation, le module de traitement 36 compare les amplitudes des pics P1, P2, P3 correspondant à des réflexions sur le réflecteur 40. Selon un mode de réalisation, les pics correspondant à des réflexions sur le réflecteur 40 sont isolés des pics correspondant à des réflexions sur l'objet 50 dans la mesure où ils se produisent à des instants supérieurs à un seuil de durée. En effet, la position relative entre le réflecteur 40 et les antennes émettrice 32 et réceptrice 35 étant connue, la durée minimale d'un trajet aller-retour d'une onde radar entre l'antenne émettrice 32 et l'antenne réceptrice 35 est connue. Selon un mode de réalisation, le module de traitement 36 détermine que l'objet 50 est en plastique lorsque les maxima des pics P1, P2, P3 correspondant à des réflexions sur le réflecteur 40 sont inférieurs à ceux obtenus en l'absence d'objet 50 et que les pics P0, P0' correspondant à des réflexions sur l'objet 50 sont inférieurs à un premier seuil d'amplitude. De cette façon, les objets 50 à faible signature électromagnétique peuvent être distingués par rapport au cas où aucun objet n'est présent. Selon un mode de réalisation, le module de traitement 36 détermine que l'objet 50 est en verre lorsque les maxima des pics P1, P2, P3 correspondant à des réflexions sur le réflecteur 40 sont inférieurs à ceux obtenus en l'absence d'objet 50 et que les pics P0, P0' correspondant à des réflexions sur l'objet 50 sont supérieurs au premier seuil d'amplitude et inférieurs à un deuxième seuil d'amplitude. Selon un mode de réalisation, le module de traitement 36 détermine que l'objet 50 est en métal lorsque les maxima des pics P1, P2, P3 correspondant à des réflexions sur le réflecteur 40 sont inférieurs à ceux obtenus en l'absence d'objet 50 et que les pics P0, P0' correspondant à des réflexions sur l'objet 50 sont supérieurs au deuxième seuil d'amplitude. Les premier et deuxième seuils d'amplitude peuvent être déterminés par des étapes de calibration et mémorisés dans la mémoire 37 du module de traitement 36.

Selon un autre mode de réalisation, le module de traitement 36 comprend la mise en oeuvre d'algorithmes d'intelligence artificielle, notamment du type réseau de neurones dont les coefficients ont été déterminés par une étape d'apprentissage. Le réseau de neurone du module de traitement 36 peut alors recevoir les valeurs du signal S comme données d'entrée et fournir un signal représentatif du matériau composant l'objet 50, par exemple un signal à une première valeur en l'absence d'objet, à une deuxième valeur lorsque l'objet 50 est en plastique, à une troisième valeur lorsque l'objet 50 est en verre, et à une quatrième valeur lorsque l'objet 50 est en métal, et ainsi de suite pour tout type de matériau.

La figure 12 illustre de façon schématique un autre mode de réalisation d'un système 70 de détection d'objets. Le système 70 de détection d'objets représenté en figure 12 comprend l'ensemble des éléments du système 10 de détection d'objets décrits précédemment à la différence que le dispositif émetteur/récepteur 30 comprend N antennes émettrices 32, adaptées chacune à l'émission d'ondes radar, et M antennes réceptrices 35, adaptées chacune à la réception d'ondes radar, N et M étant chacun un nombre entier supérieur ou égal à 2, par exemple variant de 2 à 10, les entiers M et N pouvant être égaux ou différents. En figure 12, M est égal à 2 et N est égal à 2. Le module de commande 33, non représenté en figure 12, est relié à chaque antenne émettrice 32 et est configuré pour commander séparément l'émission d'ondes radar par chacune des N antennes émettrices 32. Le module de traitement 36, non représenté en figure 12, est relié à chaque antenne réceptrice 35 et est configuré pour déterminer un signal numérique S pour chaque antenne réceptrice 35. Jusqu'à N fois M signaux numériques S peuvent être déterminés par le module de traitement 36.

Selon un mode de réalisation, la comparaison d'au moins deux signaux S permet de déterminer le sens de déplacement de l'objet 50.

Selon un mode de réalisation, le système de détection 10 peut comprendre au moins un capteur supplémentaire en plus du dispositif émetteur/récepteur 30 relié au module de traitement 36. Les données fournies par le capteur supplémentaire peuvent permettre d'améliorer la détection d'au moins certains matériaux par le module de traitement 36. A titre d'exemple, le capteur supplémentaire peut correspondre à un capteur inductif, configuré pour la détection d'un objet 50 en métal et relié au module de traitement 36.

Selon un mode de réalisation, une mesure du coefficient de réflexion sur chaque antenne 32 et 35 est mise en oeuvre. Ceci permet de réaliser une configuration monostatique et/ou un capteur par modification de l'impédance.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

Enfin, la mise en oeuvre pratique des modes de réalisation et variantes décrits est à la portée de l'homme du métier à partir des indications fonctionnelles données ci-dessus.

## Revendications

1. Système (10) de détection du matériau composant un objet (50) comprenant un dispositif émetteur/récepteur (30) d'ondes radar (R), au moins un réflecteur (40) des ondes radar (R), et un support (20), sur lequel l'objet est destiné à se déplacer, entre le dispositif émetteur/récepteur (30) et le réflecteur (40), le réflecteur (40) s'étendant en outre au-dessus du support (20) et au-dessous du support (20).

2. Système selon la revendication 1, dans lequel le support (20) est en un matériau transparent pour les ondes radar (R) .

3. Système selon la revendication 1 ou 2, dans lequel le dispositif émetteur/récepteur (30) comprend au moins une antenne émettrice (32) configurée pour émettre les ondes radar (R) et au moins une antenne réceptrice (35) configurée pour capter les ondes radar (R).

4. Système selon la revendication 3, dans lequel le dispositif émetteur/récepteur (30) comprend au moins deux antennes émettrices (32) configurées pour émettre les ondes radar (R) et au moins deux antennes réceptrices (35) configurées pour capter les ondes radar (R).

5. Système selon la revendication 3, dans lequel le dispositif émetteur/récepteur (30) comprend un module de traitement (36) et un récepteur (34), relié à l'antenne réceptrice (35), et configuré pour fournir au module de traitement un signal numérique (S) représentatif de l'enveloppe des ondes radar (R) captées par l'antenne réceptrice (35).

6. Système selon la revendication 5, dans lequel le module de traitement (36) met en oeuvre un algorithme d'intelligence artificielle, notamment du type réseau de neurones, dont les coefficients ont été déterminés par une étape d'apprentissage.

7. Système selon la revendication 5 ou 6, dans lequel le dispositif émetteur/récepteur (30) est configuré pour acquérir un signal numérique (S) en présence de l'objet (50) et un autre signal numérique (S) en l'absence de l'objet (50).

8. Système selon l'une quelconque des revendications 1 à 7, dans lequel le réflecteur (40) comprend au moins une plaque ou une grille métallique.

9. Système (5) de collecte ou de tri d'objets (50) résultant d'usages professionnels ou non professionnels, destiné à la récupération et au recyclage, notamment d'objets en verre, en métal, en carton, en plastique, ou biodéchets comprenant un système (10) de détection des matériaux des objets selon l'une quelconque des revendications 1 à 7.

10. Procédé de détection du matériau composant un objet (50) mettant en oeuvre le système de détection selon l'une quelconque des revendications 1 à 8.

11. Procédé selon la revendication 10, comprenant les étapes suivantes mises en oeuvre par le dispositif émetteur/récepteur (30) :
- émission des ondes radar (R) ;
- réception d'ondes radar qui se sont réfléchies sur l'objet (50) et/ou le réflecteur (40) ;
- détermination d'un premier signal (S) numérique représentatif de l'amplitude de l'enveloppe des ondes radar reçues en fonction du temps en présence de l'objet (50) et d'un deuxième signal (S) numérique représentatif de l'amplitude de l'enveloppe des ondes radar reçues en fonction du temps en l'absence de l'objet (50) ;
- détermination du maximum de chaque pic (P0, P'0, P1, P2, P3) du premier signal (S) et du deuxième signal ; et
- détermination que l'objet (50) est en plastique lorsque les maxima de premiers pics (P1, P2, P3) correspondant à des réflexions sur le réflecteur (40) sont inférieurs à ceux obtenus en l'absence d'objet (50) et que les maxima de deuxièmes pics (P0, P0') correspondant à des réflexions sur l'objet (50) sont inférieurs à un premier seuil d'amplitude, que l'objet (50) est en verre lorsque les maxima de premiers pics (P1, P2, P3) sont inférieurs à ceux obtenus en l'absence d'objet (50) et que les maxima des deuxièmes pics (P0, P0') sont supérieurs au premier seuil d'amplitude et inférieurs à un deuxième seuil d'amplitude, et que l'objet (50) est en métal lorsque les maxima des premiers pics (P1, P2, P3) sont inférieurs à ceux obtenus en l'absence d'objet (50) et que les deuxièmes pics (P0, P0') sont supérieurs au deuxième seuil d'amplitude.

12. Procédé selon la revendication 11, dans lequel les premier et deuxième seuils d'amplitude sont déterminés par des étapes de calibration et mémorisés dans une mémoire (37) du dispositif émetteur/récepteur (30).

13. Procédé selon la revendication 10, comprenant la mise en oeuvre d'un algorithme d'intelligence artificielle, notamment du type réseau de neurones, dont les coefficients ont été déterminés par une étape d'apprentissage.
